## Europäisches Patentamt

## European Patent Office

(11) Publication number: **0 053 769**
**B1**

## Office européen des brevets

(12) **EUROPEAN PATENT SPECIFICATION**

(45) Date of publication of patent specification: **14.11.84**

(51) Int. Cl.³: **B 23 K 13/02**

(21) Application number: **81109972.0**

(22) Date of filing: **27.11.81**

(54) **Impeder for electric resistance tube welding.**

(30) Priority: **28.11.80 JP 167712/80**
**19.05.81 JP 74249/81**

(43) Date of publication of application:
**16.06.82 Bulletin 82/24**

(45) Publication of the grant of the patent:
**14.11.84 Bulletin 84/46**

(84) Designated Contracting States:
**DE FR GB IT**

(56) References cited:
**EP-A-0 004 989**
**DE-B-1 157 725**
**DE-C-595 038**
**US-A-1 948 154**
**US-A-2 059 300**

(73) Proprietor: **Nippon Steel Corporation**
**6-3 Ohte-machi 2-chome Chiyoda-ku**
**Tokyo 100 (JP)**
(73) Proprietor: **NIPPON KINZOKU CO., LTD.**
**6-18, 3-chome, Kamiya Kita-ku**
**Tokyo (JP)**

(72) Inventor: **Takechi, Hiroshi, Ing.**
**No. 1-15-3, Kiyomidaiminami Kisarazushi**
**Chibaken (JP)**
Inventor: **Yamamoto, Takaaki, Ing.**
**No. 7-7-30, 2-chome Takami Yahatahigashiku**
**Kitakyusyushi, Fukuokaken (JP)**
Inventor: **Yoshizawa, Mitsuo, Ing.**
**No. 30-17, 1-chome Higashimotomachi**
**Kokubunjishi Tokyo (JP)**
Inventor: **Nougata, Hiroshi, Ing.**
**No. 172, Yaehara Kimitsushi**
**Chibaken (JP)**
Inventor: **Ichihara, Hirohisa, Ing.**
**No. 10-15, 1-chome Nishisakata**
**Kimitsushi Chibaken (JP)**
Inventor: **Kumai, Ko, Ing.**
**No. 1235-10, Fueda Kamakurashi**
**Kanagawaken (JP)**
Inventor: **Sato, Takashi, Ing.**
**No. 3-24-2, Shimouma Setagayaku**
**Tokyo (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 053 769**

(74) Representative: **Berg, Wilhelm, Dr. et al Patentanwälte Dr. Berg Dipl.-Ing. Stapf Dipl.-Ing. Schwabe Dr. Dr. Sandmair Postfach 86 02 45 Stuntzstrasse 16 D-8000 München 86 (DE)**

## Description

This invention relates to an impeder for electric resistance tube welding according to the preamble of claim 1. Such welding is a process for welding by heating opposite edge portions of a strip-skelp continuously formed into a tubular shape or a spirally tubular shape. An impeder of this type is known from EP—A—4989.

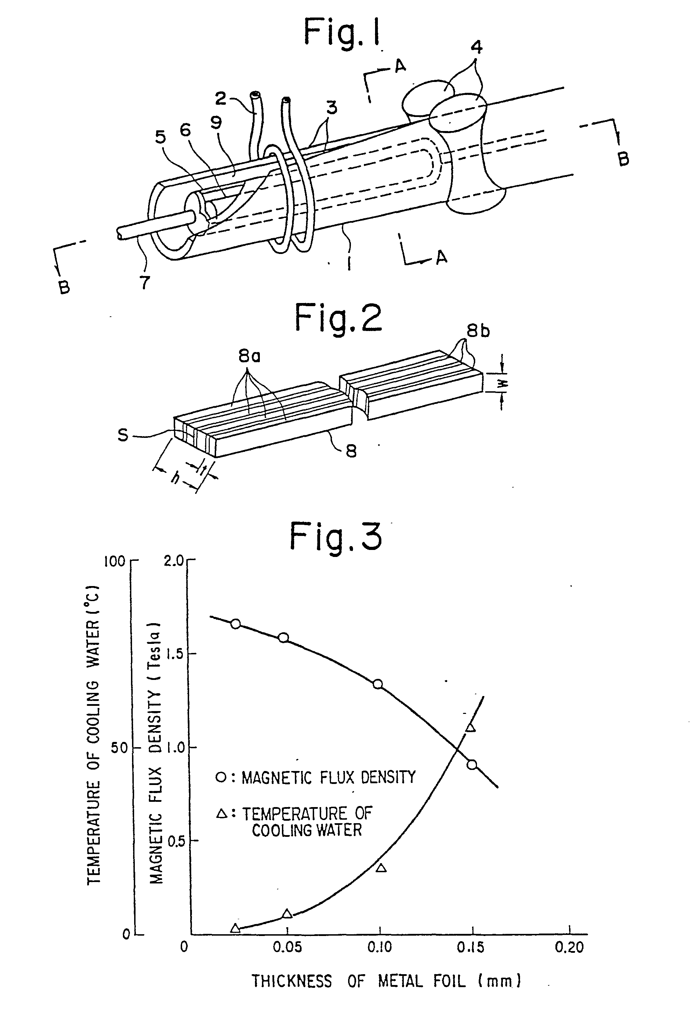

The welding portion of a known electric resistance tube welding process, e.g. a high frequency induction tube welding process is constituted as shown in Fig. 1 of the accompanying drawings. That is, a skelp 1 formed into a tubular shape (hereinafter referred to as tubular skelp) is heated at the opposite edge portions by the action of eddy current induced in the tubular skelp 1 by passing a high frequency electric current through a coil 2 and is welded under pressure by means of squeeze rolls 4. An impeder used for improving welding energy efficiency by concentrating the eddy current upon the opposite edge portions is composed of an impeder casing 5 made of an insulating material and a core 6 made of a ferromagnetic material; a mandrel pipe 7 is connected to said impeder casing 5, and the core 6 is continuously cooled by cooling water supplied from said mandrel pipe 7.

The purpose of using an impeder is to improve the welding energy efficiency of the electric resistance tube welding process. The performance of the impeder is determined by the characteristics of the core, and the core must be of high magnetic permeability and high saturation flux density. That is, for improving the welding energy efficiency in an electric resistance tube welding process, it is necessary to pass a larger amount of magnetic flux through the core of the impeder.

The amount of magnetic flux density ($\phi$) passing through a core is the product of a magnetic flux density (B) and the transverse cross-sectional area (A) of the core, that is, the amount of the magnetic flux is shown by following equation (1)

$$\phi = B \times A \qquad (1)$$

In the specification the transverse cross-sectional area of the core or the laminated metal means the area of the cross section in the direction perpendicular to the longitudinal direction of the impeder.

In the case of an electric resistance tube welding process, since the welding electric current used in the process is a large electric current of high frequency of 10—500 KHz, the impeder is exposed under a high magnetic flux density of the high frequency and thus a large eddy current generates in the core to increase the temperature thereof. Also, the generated eddy current is in proportion to the square of the magnetic flux density and the square of the frequency, and hence the heat value of the core in an electric resistance tube welding process is very large as compared to the use at a commercial frequency. Therefore, in the case of a metallic magnetic material generating a large amount of heat by eddy current, it is impossible to keep the temperature of the core of the impeder below the Curie point in a cooling step by passing cooling water, which can be usually industially performed. Thus, the core loses the ferromagnetism and cannot be used as the core of an impeder. This is the reason that a ferrite core generating a small amount of heat by eddy current in a high frequency region is used in a electric resistance tube welding process.

Even in an impeder of the type described in EP—A—4989 great eddy currents may arise. Furthermore the cooling may be difficult. It is therefore the object of this invention to provide an impeder for electric resistance tube welding of the type as set out in the preamble of claim 1 having good welding energy efficiency in electric resistance tube welding process and an excellent durability and furthermore to improve the possibility of cooling the impeder. This object is attained by the further development as set out in the characterizing clause of claim 1.

The laminated metal is preferably composed of very thin foils of metallic magnetic material such as silicon steel, low carbon steel, Permalloy, amorphous metal, etc., as a core of the impeder.

The solution according to the invention has especially the following advantages:

By insulating the foils from each other, eddy currents in the laminated metal are avoided and less heat which would have to be carried off is generated. By providing plural laminated metals (for one given cross sectional area) the cooling mechanism may carry off much better the heat still generated. That is, by laminating metal foils each having very thin thickness and a narrow width so that the metal oils are electrically insulated well from each other to form a laminated metal having a small cross sectional area and using these laminated metals as a core of an impeder, an impeder generating less heat by eddy current and having good cooling efficiency is obtained. Thus, the temperature of the core of the impeder can be sufficiently kept below the Curie point in a cooling step by passing cooling water, which can be usually performed industrially. As the results thereof, an impeder having very excellent welding energy efficiency can be obtained.

When it happens that rolling of a tubular skelp or twisting of an impeder occurs in an electric resistance welding tube, by the concentric arrangement a change of the welding energy efficiency may be avoided.

Further, by concentrically disposing the apparent cylinders composed of the laminated metal, the metal foils constituting the laminated metals are radially distributed from the center of the impeder casing and hence even when rolling of a tubular skelp or twisting of an impeder occurs in the tube welding process, a stably high welding energy efficiency is always obtained.

In addition, by disposing plural apparent concentric cylinders formed by laminated metals in the impeder casing, especially if the distance between the outside diameter of the inner apparent concentric cylinder and the inside diameter of the outer apparent concentric cylinder is e.g. about 1 mm, a necessary amount of cooling water can pass through the space between the outer concentric cylinder and the inner concentric cylinder.

Furthermore, as indicated in claim 2, it is preferred to form a slight gap between the laminated metals disposed under the opening formed between the opposite edge portions of the tubular skelp.

By forming a slight space or gap between the laminated metals disposed under the opening of the tubular skelp the magnetic flux formed by the high frequency electric current passing through the work coil can pass through the laminated metals disposed at the inner portion in the impeder casing without being magnetically shielded by the laminated metals disposed at the outer portion in the impeder casing.

By supporting the up stream ends of the laminated metals, as indicated in claim 3, and especially by forming a space between the down stream ends of the laminated metals and the inside wall of the down stream end of the impeder casing, the hydraulic pressure of cooling water supplied from a mandrel pipe into the electric resistance welding tube does not act as a compressive force to the laminated metal. Therefore, a deformation and stripping of the laminated metal can be prevented, whereby the life of the core of the impeder is greatly improved.

Moreover, at performing electric resistance tube welding, the intensity of magnetic field differs in the direction of the longitudinal axis of the tube. That is, since the intensity of the magnetic field under the work coil is strongest, it sometimes happens that the insulating adhesive of the laminated metal located under the work coil is deteriorated and extrordinarily heated. In such a case, if the impeder core is constituted by connecting the laminated metal units in the lengthwise direction of the impeder casing, as indicated claim 4, the deteriorated laminated metal unit only may be replaced with a new laminated metal unit.

Brief Description of the Drawings:

Fig. 1 is a perspective schematic view of the heat-welding portion in a known high frequency induction tube welding process,

Fig. 2 is a perspective schematic view of one piece of laminated metal used in this invention,

Fig. 3· is a graph showing the relation between the thickness of the metal foil of the laminated metal and the cooling temperature and the relation between the thickness of the metal foil of the laminated metal and the magnetic flux density,

Fig. 4, Fig. 7, Fig. 8, Fig. 9, Fig. 12, Fig. 13, and Fig. 14 are transverse cross-sectional views of various embodiments of the invention suitable for the known apparatus shown in Fig. 1 taken on the line A—A thereof in the various cases of using the core of this invention,

Fig. 5(a), Fig. 5(b), Fig. 5(c), Fig. 6(a), Fig. 6(b), and Fig. 6(c) show various possibilities of constituting the apparent laminated metal pieces by contacting laminated metal units with each other in various manners,

Fig. 10 is a longitudinal sectional view of the apparatus of Fig. 1 incorporating an embodiment of the impeder of the invention and taken on the line B—B thereof, and

Fig. 11(a), Fig. 11(b) and Fig. 11(c) are transverse cross-sectional views showing some embodiments of the shapes of the laminated metal used in this invention.

Description of the Preferred Embodiments:

Now, the constitution of this invention will be explained in detail based on the embodiments shown in the accompanying drawings.

Fig. 2 shows a laminated metal 8 composed of very thin foils of a metallic magnetic material which is used for a core of the impeder of an embodiment of this invention. The laminated metal 8 is composed of very thin foils 8a (hereinafter referred to as metal foils) of a metallic magnetic material having a higher saturation magnetic flux density than that of a ferrite core, such as silicon steel, etc., which are adhered to each other with an insulating material 8b electrically insulating and adhering the metal foils.

The thickness (t) and the width (w) of the metal foil 8a are desirably less than 0.1 mm and 10 mm respectively and practically the thickness (t) and the width (w) of the metal foil 8a are 0.005—0.1 mm and 1—10 mm respectively. It is preferred that when the width (w) of the metal foil 8a is greater than 5 mm, the thickness (h) of the laminated metal 8 matches with 5—20 mm$^2$ of the transverse cross-sectional area (S=w×h) of said laminated metal. Also, it is difficult in industrial techniques to completely insulate the metal foils 8a constituting the laminated metal 8 from each other but for the purpose of this invention, it is sufficient that the resistance between the layers or metal foils of the laminated metal 8 be higher than about 1 kΩ. In addition, it is desirable that the thickness (t) of the metal foil 8a be thin and the width (w) thereof be narrow. Also, it is preferred that the resistance between the layers of the laminated metal 8 be large and the thickness (h) of the laminated metal 8 be thin in a range of reducing the workability. Furthermore, it is preferred that the laminated metal 8 be coated with varnish, etc.

In addition, the ranges which are selected as the desirable ranges in this invention as described above are established on investigating and considering the easiness of cooling, that is the heat value and the magnetic characteristics.

Fig. 3 shows an example of the investigations. Fig. 3 is a graph showing the relation between the thickness of the metal foil and the cooling temperature and the relation of the thickness of the metal foil and the magnetic flux when the frequency is 100 KHz and the amount of cooling water is 18 liters/min. in this embodiment. With regard to the thickness (t) of the metal foils 8a, if the thickness (t) of the metal foils 8a is increased, the amount of the magnetic flux passing through the laminated metal 8 decreases and the heat value of the laminated metal 8 increases exponentially.

When the thickness (t) of the metal foil 8a is increased up to about 0.15 mm, the magnetic flux density is about twice the saturation magnetic flux density ($B_s' \simeq 0.5$ tesla) of a conventional ferrite core but the generation of heat in the laminated metal 8 increases too quickly to use as an impeder. On the other hand, when the thickness (t) of the metal foil 8a is 0.1 mm, the magnetic flux density is about 2.7 times the saturation flux density of a conventional ferrite core and the generation of heat in the laminated metal 8 is of an extent that the laminated metal can be sufficiently used as an impeder in an industrially applicable cooling method using water as a coolant.

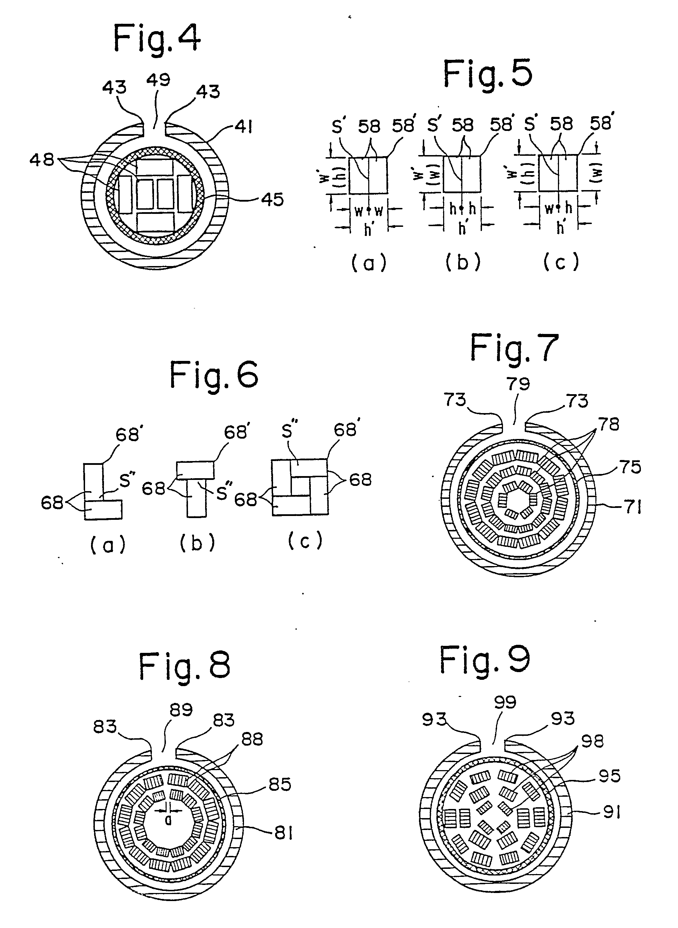

With regard to the disposition of the laminated metals in an impeder casing, as shown in Fig. 4, it is preferred to dispose the laminated metals 48 in such a manner that the surfaces of each laminated metal are brought into contact with cooling water as well as possible, that is, cooling water passes through the space between the inside surface of an impeder casing 45 and each laminated metal 48 as well as the spaces between the laminated metals 48. In Fig. 4, the numeral 41 stands for a tubular skelp, 43 opposite edge portions, and 49 an opening.

On the other hand, as is understood from equation (1), in a magnetic field by which the magnetic flux density reaches the saturation value, the magnetic flux about ($\phi$) passing through an impeder becomes larger as the transverse cross-sectional area (A) of a core is larger. Therefore, under a strong magnetic field, it is advantageous for welding energy efficiency to dispose a larger number of laminated metals in the impeder casing but if the laminated metals are in contact with each other, it sometimes happens that the cooling efficiency is reduced.

When plural laminated metal units 58 which are adjacent each other constitute one laminated metal to all appearance (hereinafter, such a laminated metal is referred to as an apparent laminated metal) as shown in Fig. 5(a), Fig. 5(b) and Fig. 5(c) and when the length (h' or w') of the apparent laminated metal 58' is longer than 5 mm and shorter than 10 mm, it is desirable that the length (w' or h') of the other side thereof be less than 50 mm² in the transverse cross-sectional area (S) (S'=h'×w') of the apparent laminated metal 58', while when the length (h' or w') of one side is over 10 mm, it is desirable that the length (w' or h') of the other side be less than 5 mm. This is also same when plural apparent laminated metals 58' further constitute one apparent laminated metal. In addition, when one side of an apparent laminated metal unit 68 is in contact with the side of other apparent laminated metal unit 68 to constitute an L-shape or T-shape apparent laminated metal 68' as shown in Fig. 6(a), Fig. 6(b) and Fig. 6(c), there is no limitation on the transverse cross-sectional area (S'') of the apparent laminated metal 68'. Now, the transverse cross-sectional area of the laminated metal is the area of the section of the laminated metal in the direction perpendicular to the longitudinal direction of the impeder casing.

The transverse cross-sectional area (A'') of a metal core necessary for improving the welding energy efficiency using the core (hereinafter, are referred to as "metal core") of this invention, which is the assembly of the laminated metals, over the welding energy efficiency in conventional processes may satisfy the condition shown by equation (2);

$$A' \times B_s' < A'' \times B_s'' \qquad (2)$$

wherein

A' is the transverse cross-sectional area of a ferrite core which would have been used for a given tube,

$B_s'$ is the saturation flux density of such a ferrite core,

A'' is the transverse cross-sectional area of a corresponding metal core of this invention, and

$B_s''$ is the saturation flux density of this metal core of this invention.

When the magnetic flux density is in the saturation value, it is advantageous for a welding energy efficiency to increase the transverse cross-sectional area (A'') of the metal core but when the magnetic flux density of the metal core does not reach the saturation flux density since the transverse cross-sectional area (A'') of the metal core is sufficiently large to the magnetic field formed by a high frequency electric current passing through the work coil (Fig. 1), the increase of the transverse cross-sectional area (A'') of the core metal does not improve the welding energy efficiency too much. In such a case, it is advantageous from the economical aspect as well as the aspect of workability to reduce the transverse cross-sectional area (A'') of the metal core in the range that the magnetic flux density of the metal core does not reach the saturated value.

In addition, with regard to the disposition of the laminated metals constituting the metal core in the impeder casing, the laminated metals should preferably be disposed in a manner of sufficiently performing cooling and in a number satisfying the condition of equation (2).

In the case of welding a pipe having a small diameter, the transverse cross-sectional area of the impeder casing is usually small and hence although it is necessary to dispose many laminated metals in the impeder casing in the range of not reducing the cooling efficiency, the number of the laminated metals disposed in the casing is frequently reduced if the laminated metals are randomly disposed. Also, it sometimes happens that rolling of a tubular skelp or twisting of an impeder occurs in an electric resistance welding tube and in such a case the welding energy efficiency changes as the case may be. In particular, if the transverse cross-sectional area of the lamianted metal is large, the foregoing tendency takes place.

In order to overcome these difficulties, laminated metals 78 are so disposed in an impeder casing 75 that the laminated metals 78 are arranged in concentric circles with regard to the impeder casing 75 as shown for example in Fig. 7 as the transverse cross-sectional arrangement. In particular the laminated metals may be disposed in the impeder casing 75 in such a manner that both edge corners of the surface of each laminated metal 78 facing the center of the impeder casing 75 are in contact with the edge corners of the surfaces of other adjacent laminated metals to form apparent concentric cylinders formed by the laminated metals 78. The number of the concentric cylinders formed by the laminated metals 78 in the impeder casing 75 shown in Fig. 7 is three but the number may be one or there is no restriction about the number of the apparent concentric cylinders.

In addition, in the case of disposing plural apparent concentric cylinders formed by the laminated metals 78 in the impeder casing 75, if the distance between the outside diameter of the inner apparent concentric cylinder and the inside diameter of the outer apparent concentric cylinder is about 1 mm, a necessary amount of cooling water can pass through the space between the outer concentric cylinder and the inner concentric cylinder.

Furthermore, as shown in Fig. 8, it is preferred to form a slight gap (a) (a is about 0.2—1 mm) between the laminated metals 88 disposed under the opening 89 formed between the opposite edge portions 83 of the tubular skelp 81. In the figure, the numeral 85 stands for an impeder casing.

When the transverse cross-sectional area of the core can be increased to the magnetic field formed by a high frequency electric current passing through the work coil 2 (Fig. 1), the cooling efficiency is good and the life of the core is prolonged in the case of disposing the laminated metals 98 constituting concentric cylinders separately from each other as shown in Fig. 9. In this case, it is unnecessary to form a gap between the laminated metals 98 disposed under the opening 99 of the tubular skelp 91.

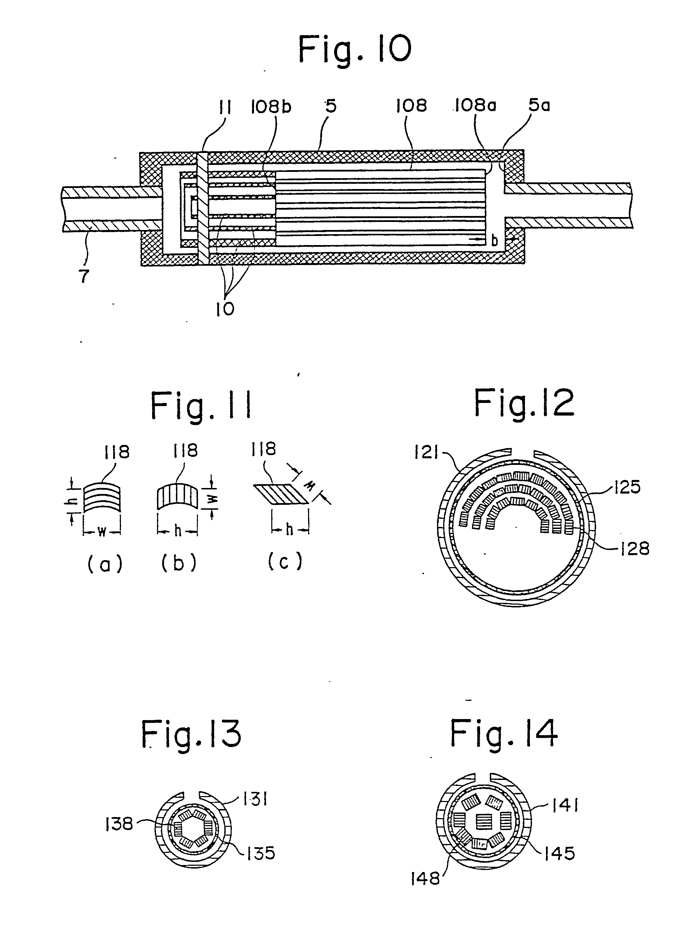

Fig. 10 shows a longitudinal sectional view of the impeder of this invention shown in the known apparatus Fig. 1 taken on the line B—B thereof. The impeder core which is the assembly of the laminated metals 108 is placed in the impeder casing 5 with a space (b) (b = 2—5 mm) between the down stream end 108a of the impeder core (laminated metals 108) and the down stream end 5a of the impeder casing 5. The laminated metals 108 are connected or fixed to supports 10 composed of a non-metallic insulator such as an epoxy resin at the opposite or up stream end 108b of the laminated metals 108 and further the support 10 is fixed to the impeder casing 5 by means of a pin 11. It is preferred that the support 10 is fixed to the laminated metals 108 with an insulating adhesive such as an epoxy resin and the support 10 can be utilized as a frame in the case of constituting the apparent concentric cylinders by the use of the laminated metals 108. In addition, the pin 11 may be made of a metal if the up stream end 108b of the laminated metals 108 is sufficiently separated from the pin 11. Also, in Fig. 10, the laminated metals 108 are constituted in a body without joints in the lengthwise direction of the impeder casing 5 but the laminated metals 108 may be constituted by connecting plural laminated metal units in the lengthwise direction of the impeder casing 5.

Many advantages of embodiments of this invention will be explained.

By concentrically disposing the apparent cylinders composed of the laminated metal as shown in Fig. 7 and Fig. 8, the metal foils constituting the laminated metals are radially distributed from the center of the impeder casing and hence even when rolling of a tubular skelp or twisting of an impeder occurs in the tube welding process, a stably high welding energy efficiency is always obtained.

Furthermore, by forming a slight space or gap between the laminated metals 88 disposed under the opening 89 of the tubular skelp 81 as shown in, for example, Fig. 8, the magnetic flux formed by the high frequency electric current passing through the work coil can pass through the laminated metals 88 disposed at the inner portion in the impeder casing without being magnetically shielded by the laminated metals 88 disposed at the outer portion in the impeder casing.

Still further, by supporting the up stream ends 108b of the laminated metals 108 and forming a space (b) between the down stream ends 108a of the laminated metals and the inside wall of the down stream end 5a of the impeder casing 5 as shown in Fig. 10, the hydraulic pressure of cooling water supplied from a mandrel pipe into the electric resistance welding tube does not act as a compressive force to the laminated metal 108. Therefore, the deformation and stripping of the laminated metal 108 can be prevented, thereby the life of the core of the impeder is greatly improved.

In addition, the transverse cross-sectional shape of the laminated metal is not limited to the shape illustrated in Fig. 2 but it may be an arc shape or a parallelogramic shape as shown by numeral 118 in Fig. 11 and in such cases, the thickness (h), width (w), and the transverse cross-sectional area (S) of the laminated metals are the same as those discussed with regard to the embodiment shown in Fig. 2. Also, in the embodiments illustrated in Fig. 7, Fig. 8, and Fig. 9, the laminated metals are uniformly disposed on a concentric circle or concentric circles but if a sufficient transverse cross-sectional area of the laminated metals is obtained for the magnetic field formed by a work coil, the laminated metals 128 may be disposed on a part of the concentric circle or circles in an impeder casing 125 as shown in Fig. 12. In addition, the numeral 121 in the figure stands for a tubular skelp. Furthermore, when the cross sectional area of an impeder casing is small, the laminated metals may be disposed as shown in Fig. 13 and Fig. 14, wherein numerals 131 and 141 stand for a tubular skelp, 135 and 145 an impeder casing, and 138 and 148 laminated metals.

An example of performing a high frequency induction tube welding process using the impeder of this invention is shown in Table 1 together with a comparative example of performing the same tube welding process using a conventional impeder.

TABLE 1

| | Example of the invention | | Comparative example |
|---|---|---|---|
| Specimen of welded tube | Dimension of welded tube 34.0 $\phi$mm × 4.2t mm | | do |
| | Kind of steel 0.28% C steel | | do |
| Welding apparatus | High frequency induction welding apparatus Frequency f = 180 KHz | | do |
| Impeder Core — Material | 3% silicon steel<br><br>Thickness of metal foil: 0.5 mm<br><br>Width of metal foil: 2.5 mm | Fe—B—Si amorphous alloy<br><br>Thickness of metal foil: 0.025 mm<br><br>Width of metal foil: 2.5 mm | Mn—Zn series ferrite |
| Impeder Core — Dimensions, Shape, Core arrangement in impeder casing | Thickness of laminated metal: 2.5 mm<br><br>Length of laminated metal: 400 mm<br><br>Number of laminated metal: 24<br><br>Double concentric structure | Thickness of laminated metal: 2.5 mm<br><br>Length of laminated metal: 400 mm<br><br>Number of laminated metal: 24<br><br>Double concentric structure | Outer diameter: 18 $\phi$mm<br><br>Inside diameter: 9 $\phi$mm<br><br>Length: 400 mm<br><br>Only one core |
| Impeder Core — Resistance between layers | 10 kΩ | 10 kΩ | — |
| Impeder Core — Saturation flux density | 2.0 tesla | 1.6 tesla | 0.5 tesla |
| Welding speed | 50 m/min. | do | do |
| Required electric power | 514 KW | 630 KW | 750 KW |

In addition, the welding energy coefficients in the case of using the impeder of this invention and the case of using the conventional impeder in the tube welding process may be compared by the required electric power (the product of the plate voltage and the plate current of the oscillator).

As is clear from the results shown in Table 1, by using the impeder of this invention, the welding energy efficiency can be greatly improved and more than 30% of the electric power can be saved.

## Claims

1. An impeder for electric resistance tube welding having at least one laminated metal piece (8) composed of foils (8a) of a metallic magnetic material, disposed in an impeder casing (5) as a core characterized in that the foils (8a) are electrically insulated (8b) from each other there are plural laminated metal pieces and at least some of the laminated metal pieces (8, 48, 78, 88, 98, 108, 128, 138, 148) are disposed in the impeder casing (5, 45, 75, 85, 95, 125, 135, 145) such as to be tangential to an imaginary cylinder or cylinders concentric with the impeder casing.

2. The impeder for electric resistance tube welding as claimed in claim 1, wherein a gap (a) is formed between the laminated metal pieces (88) disposed under an opening (89) of the tubular skelp.

3. The impeder for electric resistance tube welding as claimed in claim 1 or 2, wherein the laminated metal pieces (108) are fixed to a support (10) attached to the upstream end of the impeder casing (5).

4. The impeder for electric resistance tube welding as claimed in one of claims 1 to 3, wherein laminated metal units are connected in the longitudinal direction of the impeder casing to form the laminated metal pieces.

## Revendications

1. Concentrateur de champ pour le soudage électrique de tubes par résistance, possédant au moins une pièce métallique feuilletée (8) composée de feuilles (8a) d'un matériau magnétique métallique disposée dans un boîtier (5) de concentrateur sous forme d'un noyau, caractérisé par le fait que les feuilles (8a) sont isolées électriquement (8b) l'une de l'autre, qu'il existe une pluralité de pièces métalliques feuilletées, et qu'au moins certaines des pièces métalliques feuilletées (8, 48, 78, 88, 98, 108, 128, 138, 148) sont disposées dans le boîtier de concentrateur (5, 45, 75, 85, 95, 125, 135, 145) de façon à être tangentes à un ou des cylindres imaginaires concentriques avec le boîtier de concentrateur.

2. Concentrateur de champ pour le soudage électrique de tubes par résistance selon la revendication 1, caractérisé par le fait qu'un espace (a) est formé entre les pièces métalliques feuilletées (88), disposé sous une ouverture (89) de l'ébauche tubulaire.

3. Concentrateur de champ pour le soudage électrique de tubes par résistance selon l'une quelconque des revendications 1 et 2, caractérisé par le fait que les pièces métalliques feuilletées (108) sont fixées à un support (10) monté sur l'extrémité amont du boîtier de concentrateur (5).

4. Concentrateur de champ pour le soudage électrique de tubes par résistance selon l'une quelconque des revendications 1 à 3, caractérisé par le fait que des unités métalliques feuilletées sont reliées dans la direction longitudinale du boîtier de concentrateur pour former les pièces métalliques feuilletées.

## Patentansprüche

1. Impedanzglied für elektrisches Widerstandsrohrschweißen, mit zumindest einem laminierten Metallstück (8), das aus Folien (8a) aus einem metallischen Magnetwerkstoff zusammengesetzt ist und in einer Impedanzglied-Umhüllung (5) als Kern angeordnet ist, dadurch gekennzeichnet, daß die Folien (8a) elektrisch voneinander isoliert (8b) sind, eine Anzahl laminierte Metallstücke vorgesehen sind, und zumindest einige der laminierten Metallstücke (8, 48, 78, 88, 98, 108, 128, 138, 148) in der Impedanzglied-Umhüllung (5, 45, 75, 85, 95, 125, 135, 145) so angeordnet sind, daß sie tangential zu einem imaginären Zylinder oder Zylindern konzentrisch zu der Impedanzglied-Umhüllung sind.

2. Impedanzglied für elektrisches Widerstansrohrschweißen nach Anspruch 1, dadurch gekennzeichnet, daß ein Spalt (a) zwischen den laminierten Metallstücken (88) ausgebildet ist, welcher unter einer Öffnung (89) des Rohrstreifens angeordnet ist.

3. Impedanzglied zum elektrischen Widerstandsrohrschweißen nach einem der Ansprüche 1 oder 2, dadurch gekennzeichnet, daß die laminierten Metallstücke (108) an einem Träger (10) befestigt sind, der an dem strömungsaufwärtsgelegenen Ende der impedanz-Umhüllung (5) angebracht ist.

4. Impedanzglied für elektrisches Widerstandsschweißen nach einem der Ansprüche 1 bis 3, dadurch gekennzeichnet, daß laminierte Metallteile in der Längsrichtung der Impedanzglied-Umhüllung verbunden sind, um die laminierten Metallstücke zu bilden.

# Fig. 1

# Fig. 2

# Fig. 3

THICKNESS OF METAL FOIL ( mm )

(vertical axis left) TEMPERATURE OF COOLING WATER (°C)

(vertical axis inner) MAGNETIC FLUX DENSITY ( Tesla )

○ : MAGNETIC FLUX DENSITY

△ : TEMPERATURE OF COOLING WATER

0 053 769

Fig. 4

Fig. 5

Fig. 6

Fig. 7

Fig. 8

Fig. 9

2

# Fig. 10

11  108b  5  108  108a  5a

7

10

b

# Fig. 11

118  118  118

M

(a)  (b)  (c)

# Fig.12

121

125

128

# Fig.13

131

138

135

# Fig.14

141

145

148